# EUROPÄISCHE PATENTSCHRIFT

(11) **EP 3 410 017 B1**
(45) Veröffentlichungstag und Bekanntmachung des Hinweises auf die Patenterteilung: **09.03.2022**
(21) Anmeldenummer: 18175454.0
(22) Anmeldetag: 01.06.2018
(51) Int. Cl.: F24C 7/08

(54) **GARGERÄT**
COOKING DEVICE
APPAREIL DE CUISSON

(30) Priorität: 02.06.2017 DE 102017209399
(43) Veröffentlichungstag der Anmeldung: 05.12.2018
(73) Patentinhaber: WELBILT Deutschland GmbH, 82436 Eglfing (DE)
(72) Erfinder: WILD, Hannes, 82418 Riegsee (DE)
(74) Vertreter: Hoefer & Partner Patentanwälte mbB

(56) Entgegenhaltungen:
- DE-A1-102013 114 230
- US-A1- 2007 246 453

## Beschreibung

Die Erfindung betrifft ein Gargerät, insbesondere ein gewerbliches Gargerät, gemäß dem Oberbegriff des Anspruches 1.

Ein derartiges Gargerät ist aus der DE 10 2013 114 230 A1 bekannt. Bei diesem Gargerät ist eine Optik vorgesehen, die beispielsweise als Kamera ausgebildet sein kann und die über eine zwischengeschaltete Linse, die beide oberhalb einer Garraumöffnung angeordnet sind, den Bereich vor dem Garraum beobachten kann.

Um die Linse vor Verschmutzungen zu schützen, die insbesondere beim Öffnen der Garraumtür durch die austretende Garraumatmosphäre auftreten können, ist das bekannte Gargerät mit einer Druckgasquelle und einer Öffnung versehen, die dem Strahlengang der Optik zugeordnet ist und aus der ein von der Druckgasquelle bereitgestelltes, gegenüber der Umgebung unter Überdruck stehendes Gas austreten kann.

Die Druckgasquelle kann beispielsweise ein im Gehäuse angeordneter Ventilator sein oder es kann sich bei der Druckgasquelle um einen Anschluss an ein Druckgassystem oder eine Gasflasche handeln, was zu einem relativ hohen apparatetechnischen Aufwand beim gattungsgemäßen Gargerät führt. Da derartige Druckgasquellen überdies bekannt sind, ist bei einer weiteren Ausführungsform des bekannten Gargeräts vorgesehen, dass die Öffnung, die dem Strahlengang der Optik zugeordnet ist, im Bereich der Garraumtür angeordnet ist, so dass die Öffnung und die in der Öffnung angeordnete Optik abgedeckt wird, wenn die Garraumtür geschlossen ist. Diese Anordnung der Öffnung liefert jedoch keinen Beitrag zur Lösung des in der genannten Druckschrift genannten technischen Problems, da dieses überhaupt erst auftritt, wenn die Garraumtür geöffnet wird und da beim Öffnen der Garraumtür die Optik wiederum freigegeben wird, da sie, wie gesagt, nur bei geschlossener Garraumtür abgedeckt sein kann.

Ein weiteres Gargerät ist aus der US 2007/0246453 A1 bekannt, die eine Optikeinrichtung im Garraum lehrt, die ebenfalls während des Ablaufs von Garprozessen Verschmutzungen schutzlos ausgesetzt ist.

Es ist daher Aufgabe der vorliegenden Erfindung, ein Gargerät der im Oberbegriff des Anspruchs 1 angegebenen Art zu schaffen, das es möglich macht, auf technisch einfache und zuverlässige Art und Weise eine Optikeinrichtung vor Verschmutzungen, insbesondere durch die Garraumatmosphäre, zu schützen.

Die Lösung dieser Aufgabe erfolgt durch die Merkmale des Anspruches 1 und des Anspruchs 4.

Im Einzelnen wird erfindungsgemäß ein Gargerät geschaffen, das insbesondere als gewerbliches Gargerät ausgebildet sein kann.

Das Gargerät weist ein Gehäuse auf, in dem ein Garraum zur Aufnahme von Gargut angeordnet ist. Der Garraum weist eine Garraumöffnung auf, die mittels einer Garraumtür geöffnet und geschlossen werden kann, wobei es auch Gargeräte gibt, die keine Garraumtür benötigen.

Ferner ist das erfindungsgemäße Gargerät mit einer Optikeinrichtung versehen, die zumindestens eine optische Erfassungseinrichtung aufweisen kann, die beispielsweise als Kamera ausgebildet sein kann. Die optische Erfassungseinrichtung ist im Bereich, insbesondere oberhalb, der Garraumöffnung angeordnet, so dass mit dieser Erfassungseinrichtung der Bereich vor der Garraumöffnung erfasst werden kann, beispielsweise um zu ermitteln, ob, und wenn ja, Gargüter in den Garraum eingeführt oder aus dem Garraum nach dem Garprozess herausgenommen werden. Mit einer derartigen Erfassungseinrichtung ist es möglich, die Art der Gargüter oder auch anderer Objekte, wie beispielsweise Gargutträger, zu erfassen, um durch Erfassung des Garguttyps beispielsweise geeignete Garprozesse auswählen zu können oder um nach der Durchführung eines Garprozesses die Qualität des gegarten Garguts bestimmen zu können.

Da beim Öffnen der Garraumtür Garraumatmosphäre, insbesondere in Form von Dampf / Schwaden aus dem Garraum entweichen kann, unterliegt die Optikeinrichtung einer ständigen Verschmutzungsgefahr, wozu das erfindungsgemäße Gargerät einen Verschmutzungsschutz bzw. eine Verschmutzungsschutzeinrichtung aufweist, die es verhindern kann, dass die Optikeinrichtung, und insbesondere deren Erfassungseinrichtung und eine gegebenenfalls vor dieser angeordnete Optiklinse, durch die Garraumatmosphäre verschmutzt werden.

Zu diesem Zweck weist die Verschmutzungsschutzeinrichtung des erfindungsgemäßen Gargeräts zumindestens eine Auffangfläche auf, die mittels einer Antriebseinrichtung bewegbar geführt ist und die, in Erfassungsrichtung der Optikeinrichtung gesehen, vor dieser angeordnet ist, so dass aus dem Garraum austretende Dämpfe oder Schwaden nicht auf die Optikeinrichtung sondern auf die Auffangfläche auftreffen, so dass diese eine Verschmutzung der Optikeinrichtung auf sichere und einfache Art und Weise verhindern kann.

Durch die Bewegbarkeit der Auffangfläche wird es möglich gemacht, die auf der Auffangfläche gesammelten Verschmutzungspartikel von der Auffangfläche abzuführen. Um zu verhindern, dass die Optikeinrichtung, und insbesondere deren Erfassungseinrichtung, durch die Auffangfläche in ihrer Erfassungsmöglichkeit behindert wird, ist die Auffangfläche optisch durchsichtig ausgebildet, kann also beispielsweise aus Glas oder durchsichtigem Kunststoff bestehen.

Die Unteransprüche haben vorteilhafte Weiterbildungen der Erfindung zum Inhalt.

Gemäß Anspruch 1 weist das Gargerät eine, insbesondere kreisförmige, Drehscheibe auf, auf der die Auffangfläche ausgebildet ist.

Diese Drehschreibe kann gemäß Anspruch 1 mittels einer geeigneten Antriebseinrichtung gedreht werden, so dass auf die Auffangfläche auftreffende Partikel durch Zentrifugalkraft von der Auffangfläche wegbewegt werden können.

Um die Wirkung der Drehbewegung noch zu verbessern, ist es möglich, auf der Auffangfläche zumindestens eine Schaufeleinheit, in der Regel jedoch eine Mehrzahl von Schaufeleinheiten anzubringen, die es möglich machen, zusätzlich zur Zentrifugalkraftaufbringung auf die Verschmutzungspartikel einen radial nach außen gerichteten Luftstrom zu erzeugen, der das Ableiten der auf der Auffangfläche gesammelten Schmutzpartikel weiter verbessert.

Ferner ist es bei einer weiteren besonders bevorzugten Ausführungsform möglich, die Auffangfläche mit zumindestens einem Wischer, gegebenenfalls einer Mehrzahl von Wischern zu versehen, die ähnlich einem Scheibenwischer bei einer Kraftfahrzeug-Windschutzscheibe die auf der Auffangfläche gesammelten Partikel entfernen.

Bei einer alternativen Ausführungsform gemäß Anspruch 4 ist vorgesehen, die Auffangfläche gewölbt auszubilden. In diesem Fall ist sie Teil eines Drehzylinders, der mittels der Antriebseinrichtung entweder in eine Drehung versetzt wird oder auch hin- und hergeschwenkt wird, um durch die sich ergebende Bewegung die auf der Auffangfläche gesammelten Partikel zu entfernen.

Die Auffangfläche ist gemäß Anspruch 4 mit einem oder einer Mehrzahl von Wischern kombiniert, die das Ableiten der aufgesammelten Schmutzpartikel weiter verbessern. Weitere Einzelheiten, Merkmale und Vorteile der Erfindung ergeben sich aus nachfolgender Beschreibung von Ausführungsbeispielen anhand der Zeichnung.

Darin zeigt:
- Fig. 1: eine schematisch stark vereinfachte perspektivische Darstellung eines erfindungsgemäßen Gargeräts,
- Fig. 2: eine schematisch stark vereinfachte Prinzipdarstellung einer ersten Ausführungsform eines Verschmutzungsschutzes des erfindungsgemäßen Gargeräts,
- Fig. 3: eine der Fig. 2 entsprechende Darstellung einer weiteren Ausführungsform,
- Fig. 4: eine Draufsicht auf die Ausführungsform gemäß Fig. 3,
- Fig. 5: eine Draufsicht auf eine weitere Ausführungsform des erfindungsgemäßen Verschmutzungsschutzes,
- Fig. 6: eine der Fig. 2 entsprechende Darstellung des Verschmutzungsschutzes gemäß Fig. 5,
- Fig. 7: eine weitere stark vereinfachte perspektivische Prinzipdarstellung einer weiteren Ausführungsform des erfindungsgemäßen Verschmutzungsschutzes,
- Fig. 8: eine Stirnansicht auf die Anordnung gemäß Fig. 7, und
- Fig. 9: eine Prinzipdarstellung eines nicht erfindungsgemäßen

Beispiel einer Verschmutzungsschutzeinrichtung.

Bevor im Einzelnen auf die Prinzipien der vorliegenden Erfindung eingegangen wird, sei betont, dass im Rahmen dieser Anmeldung unter dem Begriff "Gargerät" sowohl gewerbliche Gargeräte wie auch Haushalts-Gargeräte verstanden werden, die heiße Behandlung von Nahrungsmitteln durchführen können und beispielsweise Heißluftdämpfer, Kombi-Dämpfer, Mikrowellen-Geräte umfassen können.

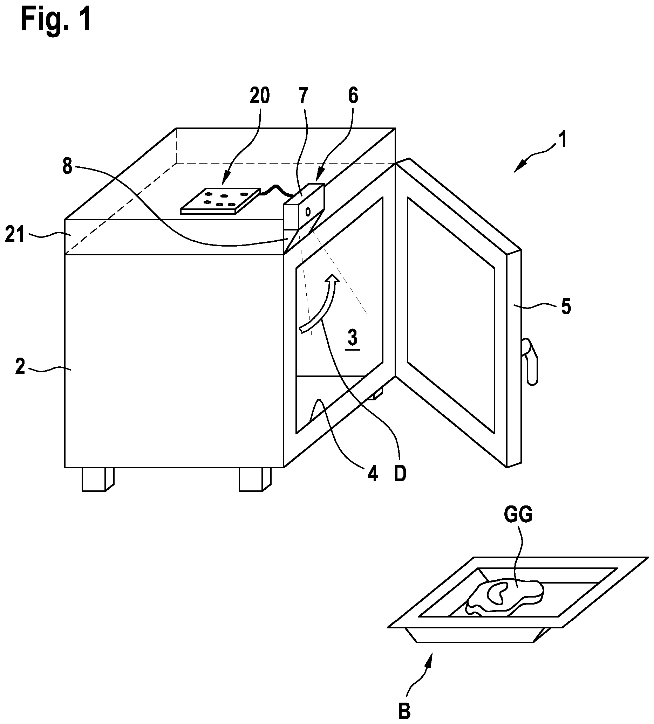

In Fig. 1 ist in schematisch stark vereinfachter Darstellung ein erfindungsgemäßes Gargerät 1 dargestellt, das ein Gehäuse 2 aufweist. Im Gehäuse 2 ist ein Garraum 3 angeordnet, der eine Garraumöffnung 4 aufweist. Die Garraumöffnung 4 kann mittels einer Garraumtür 5 geöffnet und geschlossen werden, um beispielsweise auf einem Gargutträger B angeordnetes Gargut GG in den Garraum 3 einbringen oder, nach dem Garprozess, aus dem Garraum 3 herausnehmen zu können.

In Fig. 1 ist schematisch stark vereinfacht eine Optikeinrichtung 6 dargestellt, die eine optische Erfassungseinrichtung, insbesondere in Form einer Kamera, und gegebenenfalls eine vor die Kamera gesetzte Linse umfassen kann, was nachfolgend anhand der verschiedenen Ausführungsformen der Erfindung erläutert werden wird.

Zur Vervollständigung sei darauf verwiesen, dass das Gargerät 1 ferner eine Steuerungs-/ und Auswerteeinheit 20 aufweisen kann, die bevorzugterweise, wie auch die Optikeinrichtung 6 in einem Gehäuseaufsatz 21 des Gargeräts 1 angeordnet sein kann.

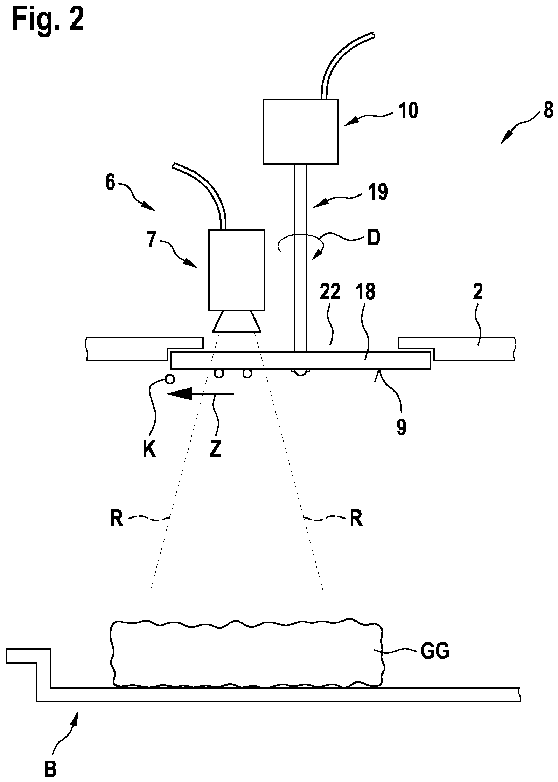

Fig. 1 verdeutlicht ferner, dass aus dem Garraum 3 bei geöffneter Garraumtür 5 Schwaden oder Dampf austreten können, die durch den Pfeil D in Fig. 1 symbolisiert sind. Dieser Dampf oder diese Schwaden können die Optikeinrichtung 6 verschmutzen, wozu diese erfindungsgemäß mit einem Verschmutzungsschutz bzw. einer Verschmutzungsschutzeinrichtung 8 versehen ist, die in Fig. 1 nur schematisch durch ein unter der Optikeinrichtung 6 angeordnetes Dreieck 8 symbolisiert ist und nachfolgend anhand der Ausführungsformen gemäß den Fig. 2 bis 9 im Einzelnen erläutert werden wird.

Fig. 2 zeigt eine erste Ausführungsvariante des Verschmutzungsschutzes 8, der in diesem Falle eine Drehscheibe 18 umfasst, auf der eine Auffangfläche 9 angeordnet ist. Wie Fig. 2 verdeutlicht, ist die Auffangfläche 9 diejenige Fläche der Drehscheibe 18, die auf das Gargut GG gerichtet ist, von dem neben den aus dem Garraum 3 austretenden Schwaden D ebenfalls nach dem Garvorgang Dämpfe aufsteigen können, die die Erfassungseinrichtung 7 der Optikeinrichtung 6 verschmutzen können. Daher ist die Drehscheibe 18 mit ihrer Auffangfläche 9 gemäß der in Fig. 2 gewählten Darstellung unterhalb der Erfassungseinrichtung 7 angeordnet, deckt diese mithin ab und ist optisch durchsichtig ausgeführt, so dass die Erfassungseinrichtung 7 trotz der vor ihr angeordneten Drehscheibe 18 im Beispielsfall das Gargut GG erfassen kann, was durch die gestrichelten Linien R symbolisiert ist, welche die Erfassungsrichtung der Erfassungseinrichtung 7 symbolisieren.

Durch die Drehung D der Drehscheibe 18, die hierfür über eine Antriebswelle 19 mit einer Antriebseinrichtung 10, beispielsweise in Form eines Elektromotors, antriebsverbunden ist, werden die Verschmutzungspartikel, die in Fig. 2 durch die Punkte K symbolisiert sind, durch Zentrifugalwirkung von der Auffangfläche 9 entfernt, wobei diese Zentrifugalwirkung durch den Pfeil Z symbolisiert ist, der auch die Bewegungsrichtung der Partikel K radial nach außen verdeutlicht.

Wie Fig. 2 schematisch verdeutlicht, ist die Antriebseinrichtung 10 und die Welle 19 im Gehäuse 2 angeordnet, das eine Gehäuseöffnung 22 aufweist, durch die hindurch die Erfassungseinrichtung 7 Gegenstände erfassen kann und in der im dargestellten Beispielsfall der Fig. die Drehscheibe 18 angeordnet ist.

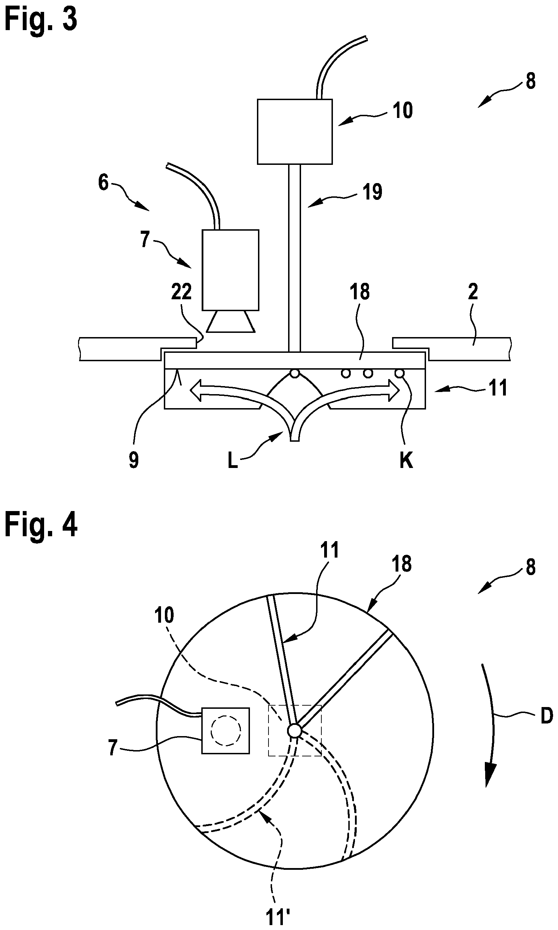

Die Fig. 3 und 4 zeigen eine alternative Ausführungsform, die im Wesentlichen derjenigen der Fig. 2 entspricht, so dass hinsichtlich aller übereinstimmender Merkmale auf die Fig. 2 verwiesen werden kann. Als zusätzliches Merkmal weist die Ausführungsform gemäß den Fig. 3 und 4 die Anordnung zumindestens einer Schaufeleinheit 11, im Beispielsfalle jedoch einer Mehrzahl derartiger Schaufeleinheiten 11, 11' auf. Diese können, wie Fig. 4 verdeutlicht, entweder radial nach außen und völlig plan verlaufen oder auch gebogen sein, was durch die Schaufeleinheiten 11' symbolisiert ist.

Hierdurch wird der in Fig. 3 durch den Doppelpfeil symbolisierte Luftstrom L erzeugt, der neben der Zentrifugalwirkung das Ableiten der Schmutzpartikel K von der Auffangfläche 9 unterstützt.

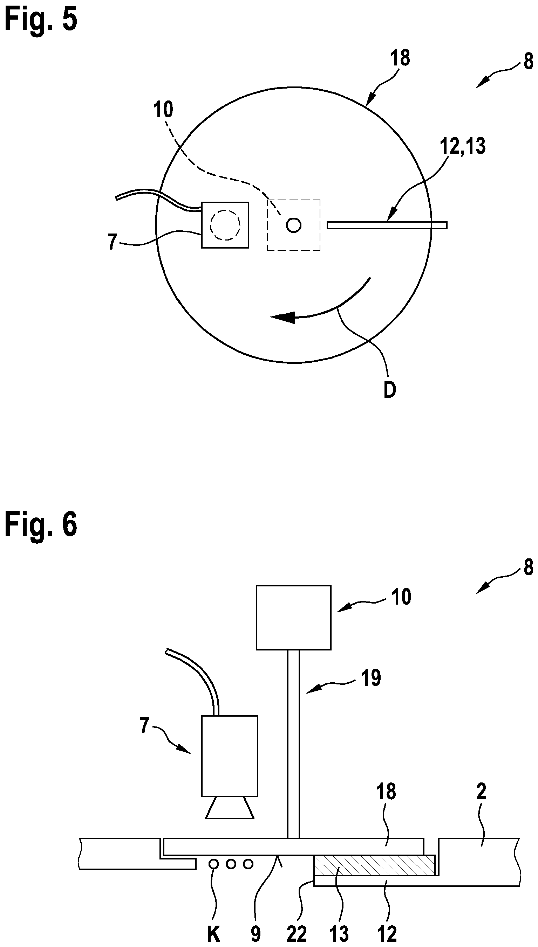

Die Fig. 5 und 6 zeigen eine weitere Ausführungsform des Verschmutzungsschutzes 8, der wiederum im Wesentlichen der Ausführungsform gemäß Fig. 2 entspricht, also eine Drehscheibe 18 aufweist, die über die Antriebswelle 19 mit der Antriebseinrichtung 10 verbunden ist und in eine Drehbewegung D versetzt wird. Bei dieser Ausführungsform ist die Auffangfläche 9 der Drehscheibe 18 mit einer Wischereinheit 13 kombiniert, die in einem Aufnahmebereich 12 des Gehäuses 2 angeordnet ist, was sich insbesondere aus der Darstellung der Fig. 6 ergibt. Diese Wischereinheit bzw. dieser Wischer 13 liegt auf der Auffangfläche 9 auf und kann Partikel K im Zusammenhang mit der Zentrifugalwirkung von der Auffangfläche 9 entfernen.

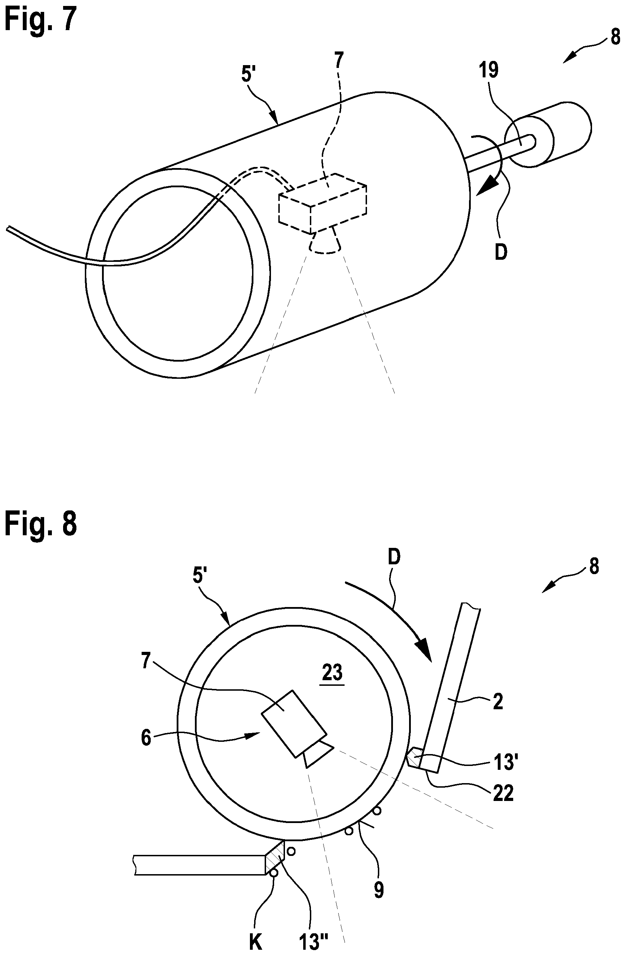

Die Fig. 7 und 8 zeigen eine weitere Ausführungsvariante des Verschmutzungschutzes 8. In diesem Falle ist die Auffangfläche 9', wie Fig. 8 verdeutlicht, gewölbt ausgebildet und stellt den Teil eines Drehzylinders 5' dar, der wiederum über die Antriebswelle 19 mit der Antriebseinrichtung 10 in Antriebsverbindung steht und in Drehung D versetzt werden kann.

Im Innenraum 23 des Drehzylinders 5' ist bei dieser Ausführungsform die Erfassungseinrichtung 7 der Optikeinrichtung 6 angeordnet und ist mit Wischern 13', 13" kombiniert, die in einem an den Drehzylinder 5' angrenzenden Bereich des Gehäuses 2 angeordnet sind und auf der Auffangfläche 9' aufliegen, und dadurch die Schmutzpartikel K von der Auffangfläche 9' trennen können, was anhand des Wischers 13" in Fig. 8 durch die Punkte K symbolisiert ist.

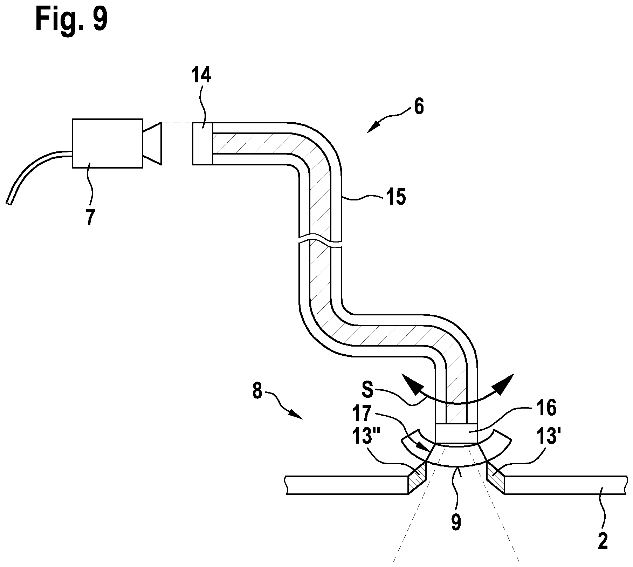

Fig. 9 zeigt ein nicht erfindungsgemäßes Beispiel eines Verschmutzungsschutzes 8, der wiederum eine gewölbte Auffangfläche 9' aufweist, die in diesem Falle Teil einer Linseneinheit 17 ist. Diese Linseneinheit 17 wirkt über einen Lichtleitkörper 15, beispielsweise in Form eines Glasfaserkabels, mit der Kamera 7 zusammen und weist hierfür eine Auskopplungsoptik 14 und eine Einkopplungsoptik 16 auf, die sich an die Linseneinheit 17 anschließt. Auch bei dieser Ausführungsform ist eine Wischeranordnung 13', 13" vorgesehen, die das Entfernen von Verschmutzungsschutzpartikeln von der Auffangfläche 9' ermöglichen. Hierfür wird die Linseneinheit 17 über eine geeignete Antriebseinrichtung in eine Schwenkbewegung versetzt, die durch den Doppelpfeil S in Fig. 9 symbolisiert ist. Mithin wird eine hin- und hergehende Schwenkbewegung S erzeugt, so dass die Auffangfläche 9' über die Wischer 13', 13" streichen kann, was das Entfernen von Verschmutzungspartikeln ermöglichen kann. Neben der voranstehenden schriftlichen Offenbarung der Erfindung wird hiermit zur Ergänzung der Offenbarung explizit auf die zeichnerische Darstellung der Erfindung in den Fig. 1 bis 9 Bezug genommen.

### Bezugszeichenliste

- 1: Gargerät
- 2: Gehäuse
- 3: Garraum
- 4: Garraumöffnung
- 5: Garraumtür
- 6: Optikeinrichtung
- 7: optische Erfassungseinrichtung, insbesondere Kamera
- 8: Verschmutzungsschutz / Verschmutzungsschutzeinrichtung
- 9, 9': Auffangfläche
- 10: Antriebseinrichtung
- 11, 11': Schaufeleinheit / Schaufeln
- 12: Wischeraufnahme
- 13, 13', 13": Wischer / Wischereinheiten
- 14: Auskopplungsoptik
- 15: Lichtwellenleiter / Glasfaserkabel
- 16: Einkopplungsoptik
- 17: Linseneinheit
- 18: Drehscheibe
- 19: Antriebswelle
- 20: Steuerungs- / und Auswerteeinheit
- 21: Gehäuseaufsatz
- 22: Gehäuseöffnung
- 23: Innenraum des Drehzylinders 5'
- D: Schwaden / Dampf
- B: Gargutträger
- GG: Gargut
- D: Drehrichtung / Drehbewegung
- R: Erfassungsrichtung der Kamera 7
- Z: Zentrifugalkraft / Ableitrichtung
- K: Schmutzpartikel
- S: Schwenkbewegung

## Patentansprüche

1. Gargerät (1), insbesondere gewerbliches Gargerät
• mit einem Gehäuse (2), in dem ein Garraum (3) angeordnet ist, der eine Garraumöffnung (4) aufweist,
• mit einer Optikeinrichtung (6), die zumindest eine optische Erfassungseinrichtung (7) im Bereich der Garraumöffnung (4) aufweist; und
• mit einem Verschmutzungsschutz (8) für die Optikeinrichtung (6), **dadurch gekennzeichnet,**
• **dass** der Verschmutzungsschutz (8) eine Auffangfläche (9; 9') aufweist, die Teil einer ebenen, insbesondere kreisförmigen, Drehscheibe (8) ist, die mittels einer Antriebseinrichtung (10) zur Entfernung von Verschmutzungspartikeln von der Auffangfläche (9; 9') durch Zentrifugalwirkung drehbar ist, wobei die Auffangfläche (9; 9'), in Erfassungsrichtung (R) der Optikeinrichtung (6) gesehen, vor dieser angeordnet und optisch durchsichtig ist.

2. Gargerät nach Anspruch 1, **dadurch gekennzeichnet, dass** die Auffangfläche (9) mit zumindest einer Schaufeleinheit (11; 11') versehen ist.

3. Gargerät nach Anspruch 1, **dadurch gekennzeichnet, dass** der Verschmutzungsschutz (8) ferner zumindestens einen Wischer (13; 13'; 13") aufweist, der auf der Auffangfläche (9; 9') aufliegt.

4. Gargerät (1), insbesondere gewerbliches Gargerät
• mit einem Gehäuse (2), in dem ein Garraum (3) angeordnet ist, der eine Garraumöffnung (4) aufweist,
• mit einer Optikeinrichtung (6), die zumindest eine optische Erfassungseinrichtung (7) im Bereich der Garraumöffnung (4) aufweist; und
• mit einem Verschmutzungsschutz (8) für die Optikeinrichtung (6), **dadurch gekennzeichnet, dass** der Verschmutzungsschutz (8) eine gewölbte Auffangfläche (9; 9') aufweist, die Teil eines Drehzylinders (5') ist, in dem die Optikeinrichtung (6) mit zumindest ihrer optischen Erfassungseinrichtung (7) angeordnet ist und mittels einer Antriebseinrichtung (10) bewegbar ist, dass auf der gewölbten Auffangfläche (9') zumindestens ein Wischer (13', 13") aufliegt und dass die Auffangfläche (9'), in Erfassungsrichtung (R) der Optikeinrichtung (6) gesehen, vor dieser angeordnet und optisch durchsichtig ist.

5. Gargerät nach einem der Ansprüche 1 bis 4, **dadurch gekennzeichnet, dass** die Garraumöffnung (4) mittels einer Garraumtür (5) öffenbar und schließbar ist.

6. Gargerät nach Anspruch 5, **dadurch gekennzeichnet, dass** die Optikeinrichtung (6) oberhalb der Garraumöffnung (4) angeordnet ist.

## Claims

1. A cooking device (1), in particular a commercial cooking device,
- comprising a housing (2), in which a cooking chamber (3) is arranged, which comprises a cooking chamber opening (4),
- comprising an optical device (6), which comprises at least one optical detecting device (7) in the region of the cooking chamber opening (4), and
- comprising a contamination protection (8) for the optical device (6), **characterized in that**:
- the contamination protection (8) comprises a collecting surface (9, 9'), which is part of a flat, in particular circular, rotating disc (8), which is rotatable by a driving device (10) for removing contamination particles from the collecting surface (9, 9') via centrifugal effect, wherein the collecting surface (9, 9'), as viewed in the detecting direction (R) of the optical device (6), is arranged in front of this and is optically transparent.

2. The cooking device according to claim 1, **characterized in that** the collecting surface (9) is provided with at least one scoop unit (11, 11').

3. The cooking device according to claim 1, **characterized in that** the contamination protection (8) further comprises at least one wiper (13, 13', 13"), which lies on the collecting surface (9, 9').

4. A cooking device (1), in particular a commercial cooking device,
- comprising a housing (2), in which a cooking chamber (3) is arranged, which comprises a cooking chamber opening (4),
- comprising an optical device (6), which comprises at least one optical detecting device (7) in the region of the cooking chamber opening (4), and
- comprising a contamination protection (8) for the optical device (6), **characterized in that** the contamination protection (8) comprises a curved collecting surface (9, 9'), which is part of a rotary cylinder (5'), in which the optical device (6) with at least its optical detecting device (7) is arranged and is movable by means of a driving device (10), that at least one wiper (13', 13") lies on the curved collecting surface (9') and that the collecting surface (9'), as viewed in the detecting direction (R) of the optical device (6), is arranged in front of this and is optically transparent.

5. The cooking device according to one of the claims 1 to 4, **characterized in that** the cooking chamber opening (4) can be opened and closed by means of a cooking chamber door (5).

6. The cooking device according to claim 5, **characterized in that** the optical device (6) is arranged above the cooking chamber opening (4).

## Revendications

1. Appareil de cuisson (1), en particulier appareil de cuisson commercial,
- avec un boîtier (2), dans lequel un espace de cuisson (3) est agencé, lequel présente une ouverture d'espace de cuisson (4),
- avec un dispositif optique (6) qui présente au moins un dispositif de détection optique (7) dans la zone de l'ouverture d'espace de cuisson (4) ; et
- avec une protection contre les salissures (8) pour le dispositif optique (6), **caractérisé en ce**
- **que** la protection contre les salissures (8) présente une surface de collecte (9 ; 9') qui fait partie d'un disque rotatif (8) plan, en particulier circulaire, qui est rotatif au moyen d'un dispositif d'entraînement (10) pour le retrait de particules de salissure de la surface de collecte (9 ; 9') par l'action centrifuge, dans lequel la surface de collecte (9 ; 9'), vue dans le sens de détection (R) du dispositif optique (6), est agencée avant celui-ci et est transparente optiquement.

2. Appareil de cuisson selon la revendication 1, **caractérisé en ce que** la surface de collecte (9) est pourvue d'au moins une unité de pale (11 ; 11').

3. Appareil de cuisson selon la revendication 1, **caractérisé en ce que** la protection contre les salissures (8) présente de plus au moins un balai (13 ; 13' ; 13") qui repose sur la surface de collecte (9 ; 9').

4. Appareil de cuisson (1), en particulier appareil de cuisson commercial,
- avec un boîtier (2), dans lequel un espace de cuisson (3) est agencé, lequel présente une ouverture d'espace de cuisson (4),
- avec un dispositif optique (6) qui présente au moins un dispositif de détection optique (7) dans la zone de l'ouverture d'espace de cuisson (4) ; et
- avec une protection contre les salissures (8) pour le dispositif optique (6), **caractérisé en ce que** la protection contre les salissures (8) présente une surface de collecte (9 ; 9') bombée qui fait partie d'un cylindre rotatif (5'), dans lequel le dispositif optique (6) est agencé avec au moins son dispositif de détection (7) optique et est mobile au moyen d'un dispositif d'entraînement (10), **en ce qu'**au moins un balai (13', 13") repose sur la surface de collecte (9') bombée et **en ce que** la surface de collecte (9'), vue dans le sens de détection (R) du dispositif optique (6), est agencée avant celui-ci et est transparente optiquement.

5. Appareil de cuisson selon l'une quelconque des revendications 1 à 4, **caractérisé en ce que** l'ouverture d'espace de cuisson (4) est ouvrable et refermable au moyen d'une porte d'espace de cuisson (5).

6. Appareil de cuisson selon la revendication 5, **caractérisé en ce que** le dispositif optique (6) est agencé au-dessus de l'ouverture d'espace de cuisson (4).
